# EUROPEAN PATENT SPECIFICATION

(11) **EP 0 584 924 B1**
(45) Date of publication and mention of the grant of the patent: **08.05.1996**
(21) Application number: 93305545.1
(22) Date of filing: 15.07.1993
(51) Int. Cl.: B67D 5/32, G01M 3/28

(54) **A fuel dispensing system**
Kraftstoff-Abgabevorrichtung
Installation de distribution de carburant

(30) Priority: 21.07.1992 US 917762
(43) Date of publication of application: 02.03.1994
(73) Proprietor: GILBARCO INC., Greensboro North Carolina 27420 (US)
(72) Inventor: Grose, John Stephen, Kennersville, North Carolina 27284 (US)
(74) Representative: Cockayne, Gillian

(56) References cited:
- EP-A- 0 351 061
- US-A- 3 940 020
- US-A- 4 658 986
- US-A- 5 072 621

## Description

The present invention relates to improvements in fuel dispensing systems including leak detection means, and particularly but not exclusively to such systems employing a master/satellite configuration of dispensers.

Master and satellite fuel dispenser systems have been known for a number of years and are particularly prevalent for use in fueling large lorries which have fuel tanks on both sides of the vehicle. In such systems, the master and satellite dispensers are located on opposed sides of a driveway onto which the vehicle to be fuelled is driven. The driver removes the nozzle from the master dispenser and actuates a switch on the master dispenser, commonly a cradle lever that supports the nozzle when it is idle. He or she can then dispense fuel through the nozzle into the tank located on the side of the lorry adjacent the master dispenser. Then, by leaving the nozzle of the master dispenser in the fuel tank, he can walk around to the other side of the lorry and fuel the tank on that side from the satellite dispenser. Upon returning the satellite nozzle to the satellite dispenser cradle and returning the master dispenser nozzle to the master dispenser cradle, it is ascertained that the dispensing of fuel is complete and the total values for the transaction can be computed.

Typically, the fuel to the master dispenser comes from an underground storage tank having a submerged turbine pump, which is activated when fuel is to be pumped. In a known configuration, the lifting of the nozzle from the cradle of the master dispenser sends a signal to a processing unit in the master dispenser. The processing unit cancels out the last transaction information in the dispenser and actuates the submerged pump. A solenoid valve located downstream of the meter in the dispenser is held shut for a period of three to five seconds to permit pressure in the pipe from the submerged pump to the solenoid valve to build up. Known mechanical devices along the line from the underground tank to the master dispenser determine if a leak exists between the underground tank and the solenoid valve of the master dispenser. After the three to five second period, the solenoid valve in the master dispenser is opened to permit dispensing of fuel from the master dispenser. The leak test performed conventionally only ascertains if a leak exists between the underground tank and the master dispenser. Various other types of systems for detecting leaks between an underground tank and a dispenser exist, examples being disclosed in US patents 3,940,020, 5,072,621, and European patent application 0,351,061.

According to the present invention there is provided a fuel dispensing system comprising: a fuel dispenser; a switch for determining whether the dispenser is in a dispensing or non dispensing state; a pump for pumping fuel from a reservoir to a nozzle of the dispenser, a meter remote from the dispenser for measuring the flow of fuel in a pipe between the pump and the nozzle; and electronic leak detection means for testing for leaks in a pipe between the meter and the nozzle, the leak detection means including means for activating the pump and generating a leak detection signal if fuel flow is detected by the meter whilst the dispenser is in a non dispensing state, wherein the meter measures the quantity of fuel dispensed when the fuel dispenser is in a dispensing state.

By employing the present invention it is possible to detect leaks in piping of a dispensing system downstream from the meter, which leaks would often be too small to be detected by conventional detectors, which are relatively simple due to the requirement that they be mounted underground. Piping downstream of the meter of a dispenser is often the most susceptible to failure due to it often being in close proximity to the ground surface, where it can be exposed to forces due to the passage of vehicles above, and due to the effects of thermal expansion and contraction.

No additional meter is required to that normally provided in a dispensing system, the meters used for measuring the amount of fuel dispensed being able to detect the flow of very small quantities of fuel.

This invention is applicable to any fuel dispensing system wherein a dispenser is located remote from a meter. In one embodiment the fuel dispenser may be a satellite dispenser, the system further comprising a master dispenser also having a nozzle to which fuel is pumped, the satellite dispenser being remote from the meter. Such systems, as described in the introductory portions of this specification, are often used for fuelling lorries, and consequently the pipework between the master and satellite dispenser is particularly prone to stress due to the forces exerted by the vehicles being fuelled on the intervening ground between the master and satellite dispenser through which the pipework passes.

In a master/satellite dispenser arrangement, it is preferable that the meter is located in the master dispenser, and also that the switch is located in the master dispenser, the satellite dispenser merely providing a terminal to which a second hose and nozzle is attached.

Preferably the switch is actuated by removal of the nozzle from a cradle, for this will prevent the system being in a non dispensing state whilst the nozzle is removed, and therefore prevent a test being performed except when the nozzle is in the cradle.

Advantageously the leak detection means automatically activates the pump and tests for leaks on a periodic basis when the dispenser is in a non dispensing state, and preferably terminates such a test on the dispensing system being switched to a dispensing state. This prevents interference with normal operation of the dispensing system.

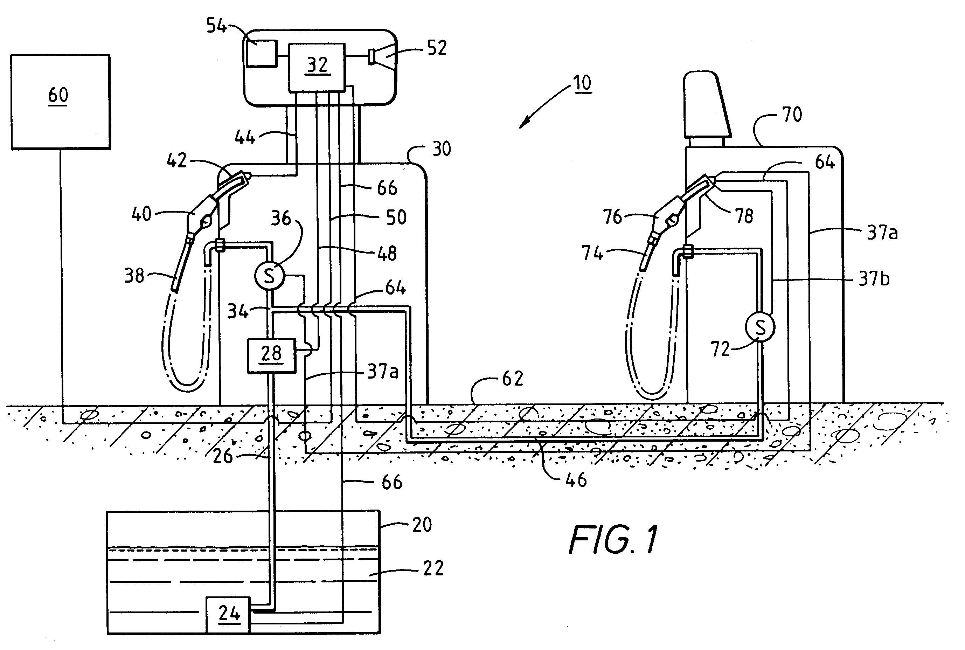

One embodiment of the invention will now be described, by way of example only, with reference to the accompanying drawing which is a schematic diagram of the components of a dispensing system in accordance with the present invention.

Referring to the Figure, the apparatus according to a preferred embodiment of the invention includes an underground storage tank 20 capable of holding a motor fuel 22, such as petrol or diesel. A submerged turbine pump 24 is adapted to force fuel 22 from the tank 20 through primary piping 26 to a master dispenser 30. Within the master dispenser 30, a meter 28 is provided downstream of the piping 26. The meter 28 is a conventional meter, such as the meter and pulser combination sold by Gilbarco, Inc. of Greensboro, North Carolina, or any other desired fluid flow meter. Data concerning the flow rate dispensed by the meter 28 is output on a line 48 to a central processing unit 32 housed within the master dispenser 30. Fuel exiting the meter 28 passes out through a pipe tee 34 so that it is available to a solenoid valve 36, and via secondary piping 46 to a solenoid valve 72 of a satellite dispenser 70. The solenoid valves 36 and 72 are normally closed, but are openable upon receipt of an opening signal along lines 64, 37a and 37b from the cpu 32. When the valves 36 and 72 are open, the pressurized fuel is available in hoses 38 and 74 which terminate respectively in conventional fuel dispensing nozzles 40 and 76. Also as is conventional, the fuel dispensing nozzles are stored in nozzle cradles 42 and 78 respectively.

The customer dispenses fuel from the master dispenser 30 by removing the nozzle 40 from the cradle. This removal is sensed by a switch (not shown) which passes a signal along line 44 to the central processing unit 32.

Central processing unit 32 may be operatively associated with a visual display 54 such as a cathode ray tube, liquid crystal displays or the like. The cpu 32 may also be operatively associated to a speaker 52.

The second leg of piping 46 passes from the pipe tee 34, exits the master dispenser 30 and extends under ground 62 to satellite dispenser 70. As can be appreciated, the ground 62 may very well be a driveway over which heavy vehicles pass, so that the secondary piping 46 may periodically be subjected to severe physical stresses and strain. In the event that such stresses and strains or ordinary corrosion and the like result in a leak in the secondary piping 46, it is desirable to ascertain same as quickly as possible.

The cpu 32 is programmed or otherwise arranged to go into a leak detection mode, preferably at a time of day of little or no expected actual dispenser use. In doing so, the cpu outputs a signal along line 66 to turn on pump 24, and monitors line 48 to determine if meter 28 signals the flow of any liquid. Solenoid valves 36,72 are maintained closed during this period by the absence of signals on lines 64, 37a and 37b. While in the leak detection mode, cpu 32 also monitors lines 44, 64. If either returns a signal that a pump handle has been lifted, the leak detection test isaborted, so that normal use of the pump dispensers may proceed. If a leak is observed, the cpu may be programmed to prevent use of the dispensers.

The master and satellite dispensers may be one of a multiplicity of dispensers located at a fuel dispensing facility. If so, a master site controller 60 may be provided to supervise the operations of the various master and satellite dispensers. If this is desired, a line 50 from the cpu 32 to the site controller 60 is included to pass data concerning leak conditions detected by the apparatus.

In normal operation of the master and satellite dispensers for fuel dispensing, the lorry driver parks his or her vehicle adjacent the master dispenser 30, removes the nozzle 40 from the cradle 42 and raises the nozzle 42, which causes a signal topass along line 44 to the cpu 32. The cpu 32 in turn passes a signal along line 66 to the pump 24 to begin pumping fuel 22 through pipe 26. Conventional leak detectors are provided along primary pipe 26 to determine if a leak exists along pipe 26, and a three to five second delay is provided after the actuation of line 66 during which such leak detectors sense any leaks. If no leak is sensed, the cpu 32 passes a signal along lines 64, 37a and 37b to open the solenoid valves 36 and 72 to permit dispensing of fuel through the nozzles 40 and 76, with a valve in the nozzles 40 and 76 under the control of the operator.

When the master dispenser side of the lorry has been fuelled, the nozzle 40 is left in the fuel tank and the nozzle 76 is removed from the cradle 78 of the satellite dispenser 70 to permit the dispensing from the satellite dispenser into a tank on the other side of the lorry. Thus, the fuelling of both tanks on both sides of the lorry through the master and satellite dispensers are both reflected by the one transaction computed by the cpu 32.

At some time when both the master and satellite dispensers are idle, such as in the early hours of the morning, the cpu 32 will actuate the submerged pump 24 while maintaining both of the solenoid valves 36 and 72 closed. Thus, the pump 24 will pressurize the lines 26, 46, but if no leak exists, no actual fluid will pass through the meter 28. However, in the event that there is a leak along line 46, or a leak in the solenoid valve 72, the meter 28 will detect some fluid motion and provide a signal along line 48 to the central processing unit 32. Since the central processing unit is operating in the test mode, the receipt of that signal along line 48 will be interpreted as indicative of a leak condition. This leak condition may in turn be signalledon the visual display 54, or audibly through horn 52. Furthermore, the cpu, being in control of the master and satellite dispensers, may disable them until the leak is repaired, to minimize any loss of product, environmental damage and fire hazard. Finally, if desired, the cpu 32 may pass a signal along line 50 to the site controller 60 indicating that the leak condition has been detected so that an operator at the site controller 60 may take appropriate remedial action. Those of ordinary skill in the art will readily know how to program or configure the cpu 32 to operate in the fashion described herein.

The above described apparatus is given by way of example only, and it will be appreciated that various alternative arrangements will be within the scope of the invention as claimed. In particular it will be appreciated that the invention is equally applicable to a satellite only dispensing system, that is where a meter or several meters are located remote from a satellite dispenser or plurality of satellite dispensers. The satellite dispensers need then only comprise a nozzle, hose and nozzle cradle incorporating a conventional switch. A display may be mounted on the satellite dispenser or in close proximity thereto. In another alternative arrangement the solenoid valve may either be omitted, or held open during a leak detection test, thereby extending the testing for leaks to the nozzle hose and nozzle itself.

## Claims

1. A fuel dispensing system comprising: a fuel dispenser (70); a switch for determining whether the dispenser is in a dispensing or non dispensing state; a pump (24) for pumping fuel from a reservoir (20) to a nozzle (76) of the dispenser (70); a meter (28)remote from the dispenser for measuring the flow of fuel in a pipe (46) between the pump and the nozzle (76); and electronic leak detection means for testing for leaks in a pipe between the meter (28) and the nozzle (76), the leak detection means including means (32) for activating the pump (24) and generating a leak detection alarm signal if fuel flow is detected by the meter (28) whilst the dispenser is in a non dispensing state, characterised in that the meter (28) measures the quantity of fuel dispensed when the fuel dispenser (70) is in a dispensing state.

2. A system as claimed in claim 1 wherein the fuel dispenser (70) is a satellite dispenser, and the system further comprises a master fuel dispenser (30) also having a nozzle (40) to which fuel is pumped, the satellite dispenser (70) being remote from the meter (28).

3. A system as claimed in claim 2 wherein the meter (28) is located in the master dispenser (30) and measures the quantity of fuel dispensed via the master and satellite dispensers (30, 70).

4. A system as claimed in claim 3 or 4 wherein the switch is located on the master dispenser.

5. A system as claimed in any preceding claim wherein the switch is activated by removal of the nozzle (40) from a cradle.

6. A system as claimed in any preceding claim wherein the leak detection means automatically activates the pump (28) and tests for leaks on a periodic basis, when the dispenser is in a non dispensing state.

7. A system as claimed in any preceding claim wherein the leak detection means terminates a leak detection on the dispensing system being switched to a dispensing state.

8. A system as claimed in any preceding claim wherein the dispensing system includes a display and wherein when the leak detection means outputs a leak detection signal it displays an error message on the display.

9. A system as claimed in claim 8 wherein the display (54) is located on a master dispenser (30) of the system.

10. A system as claimed in any preceding claim wherein the leak detection signal disables use of the dispensing system when a leak is detected.

11. A system as claimed in any preceding claim further comprising means (52) for transmitting an audible alarm.

12. A system as claimed in any preceding claim further comprising a site controller (60) to which the alarm leak detection signal is transmitted.

13. A system as claimed in any preceding claim wherein a valve (36, 72) is located upstream of the nozzle which valve is maintained closed during a leak detection test.

## Patentansprüche

1. Ein Treibstoffausgabesystem mit: einem Treibstoffausgeber (70); einem Schalter zum Bestimmen, ob der Ausgeber sich in einem ausgebenden oder nicht-ausgebenden Zustand befindet; einer Pumpe (24) zum Pumpen von Treibstoff aus einem Reservoir (20) zu einer Düse (76) des Ausgebers (70); einem Meßgerät (28) entfernt von dem Ausgeber zum Messen des Flusses von Treibstoff in einer Röhre (46) zwischen der Pumpe und der Düse (76); und einem elektronischen Leckdetektionsmittel zum Testen auf Lecks in einer Röhre zwischen dem Meßgerät (28) und der Düse (76), wobei das Leckdetektionsmittel ein Mittel (32) zum Aktivieren der Pumpe (24) und Erzeugen eines Leckdetektionsalarmsignales umfaßt, wenn Treibstoffluß durch das Meßgerät (28) detektiert ist, während der Ausgeber sich in einem nicht-ausgebenden Zustand befindet,
dadurch gekennzeichnet,
daS das Meßgerät (28) die Menge an Treibstoff mißt, die ausgegeben wird, wenn der Treibstoffausgeber (70) sich in einem ausgebenden Zustand befindet.

2. Ein System nach Anspruch 1,
worin der Treibstoffausgeber (70) ein Satellitenausgeber ist, und das System weiter einen Haupttreibstoffausgeber (30) umfaßt, ebenfalls mit einer Düse (40), zu welcher Treibstoff gepumpt wird, wobei der Satellitenausgeber (70) von dem Meßgerät (28) entfernt liegt.

3. Ein System nach Anspruch 2,
worin das Meßgerät (28) in dem Hauptausgeber (30) angeordnet ist und die Menge von Treibstoff mißt, die durch die Haupt- und Satellitenausgeber (30, 70) ausgegeben ist.

4. Ein System nach Anspruch 3 oder 4,
worin der Schalter auf dem Hauptausgeber angeordnet ist.

5. Ein System nach irgendeinem vorhergehenden Anspruch, worin der Schalter durch die Entfernung der Düse (40) aus einer Wiege aktiviert ist.

6. Ein System nach einem vorhergehenden Anspruch, worin das Leckdetektionsmittel automatisch die Pumpe (28) aktiviert und auf Lecks auf einer periodischen Basis testet, wenn der Ausgeber sich in einem nicht ausgebenden Zustand befindet.

7. Ein System nach irgendeinem vorhergehenden Anspruch, worin das Leckdetektionsmittel eine Leckdetektion daraufhin beendet, daß das ausgebende System zu einem ausgebenden Zustand geschaltet wird.

8. Ein System nach irgendeinem vorhergehenden Anspruch, worin das Ausgabesystem eine Anzeige umfaßt und worin, wenn das Leckdetektionsmittel ein Leckdetektionssignal ausgibt, es eine Fehlermeldung auf der Anzeige anzeigt.

9. Ein System nach Anspruch 8,
worin die Anzeige (54) auf einem Hauptausgeber (30) des Systems angeordnet ist.

10. Ein System nach irgendeinem vorhergehenden Anspruch, worin das Leckdetektionssignal den Gebrauch des ausgebenden Systems außer Kraft setzt, wenn ein Leck detektiert ist.

11. Ein System nach irgendeinem vorhergehenden Anspruch, weiter mit einem Mittel (52) zum Übertragen eines hörbaren Alarms.

12. Ein System nach irgendeinem vorhergehenden Anspruch, weiter mit einer Platzsteuerung (60), zu welcher das Alarmleckdetektionssignal übertragen ist.

13. Ein System nach irgendeinem vorhergehenden Anspruch, worin ein Ventil (36, 72) stromaufwärts der Düse angeordnet ist, welches Ventil während eines Leckdetektionstestes geschlossen gehalten ist.

## Revendications

1. Système de distribution de carburant comprenant : un distributeur de carburant (70) ; un commutateur pour déterminer si le distributeur est dans un état de distribution ou un état de non-distribution ; une pompe (24) pour pomper du carburant depuis un réservoir (20) jusqu'à une buse (76) du distributeur (70) ; un dispositif de mesure (28) éloigné du distributeur pour mesurer l'écoulement de carburant dans un tube (46) entre la pompe et la buse (76) ; et des moyens de détection électroniques des fuites pour tester les fuites dans un tube entre le dispositif de mesure (28) et la buse (76), les moyens de détection de fuite comprenant des moyens (32) pour activer la pompe (24) et pour produire un signal d'alarme de détection de fuite si un écoulement de carburant est détecté par le dispositif de mesure (28) tandis que le distributeur est dans un état de non-distribution, caractérisé en ce que le dispositif de mesure (28) mesure la quantité de carburant distribuée lorsque le distributeur de carburant (70) est dans un état de distribution.

2. Système selon la revendication 1, dans lequel le distributeur de carburant (70) est un distributeur satellite, et le système comprend en outre un distributeur maître de carburant (30) ayant également une buse (40) vers laquelle du carburant est pompé, le distributeur satellite (70) étant éloigné du dispositif de mesure (28).

3. Système selon la revendication 2, dans lequel le dispositif de mesure (28) est situé dans le distributeur maître (30) et mesure la quantité de carburant distribuée via le distributeur maître et le distributeur satellite (30, 70).

4. Système selon l'une ou l'autre des revendications 3 et 4, dans lequel le commutateur est situé sur le distributeur maître.

5. Système selon l'une quelconque des revendications précédentes, dans lequel le commutateur est activé par enlèvement de la buse (40) depuis un berceau.

6. Système selon l'une quelconque des revendications précédentes, dans lequel les moyens de détection de fuite activent automatiquement la pompe (28) et procèdent à un test vis-à-vis des fuites sur une base périodique, lorsque le distributeur est dans un état de non-distribution.

7. Système selon l'une quelconque des revendications précédentes, dans lequel les moyens de détection de fuite terminent une détection de fuite lorsque le système de distribution est passé vers un état de distribution.

8. Système selon l'une quelconque des revendications précédentes, dans lequel le système de distribution comprend un affichage, et lorsque les moyens de détection de fuite délivrent un signal de détection de fuite, ils affichent un message d'erreur sur l'affichage.

9. Système selon la revendication 8, dans lequel l'affichage (54) est situé sur un distributeur maître (30) du système.

10. Système selon l'une quelconque des revendications précédentes, dans lequel le signal de détection de fuite empêche l'utilisation du système de distribution lorsqu'une fuite est détectée.

11. Système selon l'une quelconque des revendications précédentes, comprenant en outre des moyens (52) pour transmettre une alarme audible.

12. Système selon l'une quelconque des revendications précédentes, comprenant en outre une unité de commande de site (60) à laquelle est transmis le signal d'alarme de détection de fuite.

13. Système selon l'une quelconque des revendications précédentes, dans lequel une soupape (36, 72) est située en amont de la buse, ladite soupape étant maintenue fermée pendant un test de détection de fuite.
